# DEMANDE DE BREVET EUROPEEN

(11) **EP 2 193 720 A1**
(43) Date de publication de la demande: **09.06.2010**
(21) Numéro de dépôt: 09306135.6
(22) Date de dépôt: 25.11.2009
(51) Int. Cl.: A22C 21/00

(54) **Dispositif autorisant la découpe des filets de vollaille intégré dans une installation de découpe automatique des volailles**

(30) Priorité: 02.12.2008 FR 0858186
(71) Demandeur: Etablissements J.P. Bayle, 42480 La Fouillouse (FR)
(72) Inventeur: BAYLE, Jean-Pierre, 42510, NERVIEUX (FR)
(74) Mandataire: Thivillier, Patrick

(57) **Abrégé**

Ce dispositif en ce qu'il est agencé pour autoriser la présentation de la volaille suspendue entière, tête en bas, et en ce que le dispositif autorisant la découpe des filets de volailles est intégré dans un portique (P), et ce qu'il comprend un dispositif (D2) autorisant la présentation de la volaille dans une situation inversée et retournée, avec tête relevée, en vue de la découpe des filets, et en ce que le dispositif (D2) comprend un outil de retournement (4), articulé à sa base par un mécanisme d'articulation (M), susceptible de pénétrer dans le corps de la volaille par introduction dans sa partie abdominale, pour ensuite permettre son relèvement, et en ce que ledit outil de retournement (4) est disposé et articulé par le mécanisme (M) disposé sur une structure support réglable en position par rapport au portique (P), et en ce que la structure support comprend un coulisseau (5) susceptible de se déplacer verticalement le long d'une colonne de guidage disposée sur le portique selon une amplitude telle que la distance parcourue est suffisante pour mettre en oeuvre le dispositif (D2) et l'actionner pour lui faire prendre une position de relevage de la volaille (V), et en ce que ledit coulisseau est agencé pour autoriser d'une part le déplacement horizontal d'un bras (7) coopérant avec l'outil de retournement, et d'assurer le positionnement et l'introduction d'une biellette (8) en liaison solidaire au mécanisme (M) d'articulation du moyen de retournement de la volaille,et en ce que la commande en fonctionnement de ladite structure support autorise la mise en oeuvre de l'outil par son introduction dans la volaille et son retournement pour autoriser la découpe des filets, puis son abaissement et l'extraction du corps de la volaille, filets découpées, ladite volaille étant ensuite convoyée vers un autre poste opératoire.

## Description

L'invention se rattache au secteur technique des installations automatiques de découpe des volailles, canards, poulets et similaires.

Le demandeur a ainsi pour activité la conception de ce type d'installation qui permet dans le cadre d'un automatisme de production de séparer les différents morceaux de volailles, selon des quantités traitées à l'heure considérables (750 à 1200 volailles traitées à l'heure, selon les installations).

Ces installations sont agencées avec de nombreux mécanismes qui participent chacun à une opération de découpe d'un morceau, la volaille étant suspendue par les pattes et suivant un cheminement précis défini le long d'un convoyeur.

Les opérations sont ainsi les suivantes, la tête de la volaille ayant été enlevée ou non :
a) Mise en place une à une des volailles en suspension sur des crochets par leurs pattes, la tête se trouvant en bas.
b) Découpe du croupion.
c) Tirage des ailes pour les écarter.
d) Coupage des ailes.
e) Découpe des filets.
f) Découpe des manchons.
g) Découpe de la culotte.
h) Déjointage.
i) Décrochage des cuisses

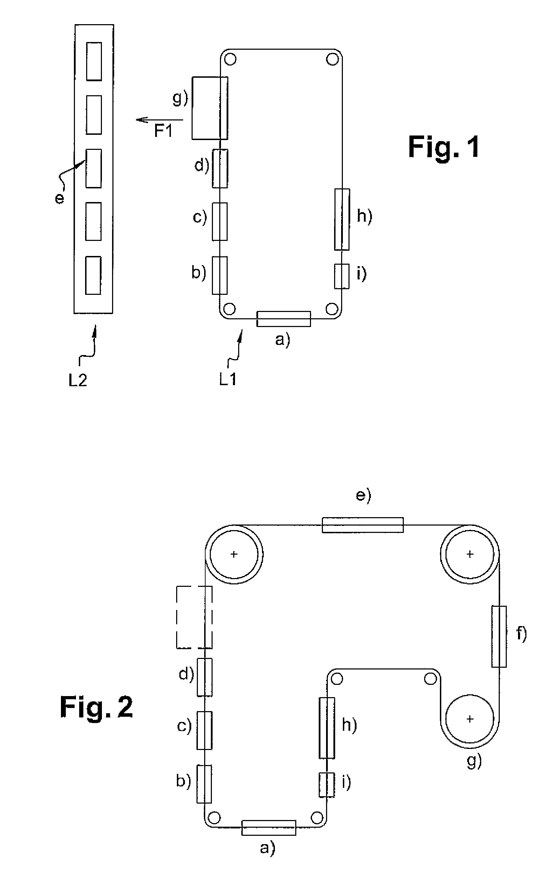

On a illustré figure 1 et de manière schématique le procédé de découpe des filets selon la pratique antérieure. La phase de découpe des filets s'effectue de manière indépendante par une installation complémentaire adjacente à la ligne effectuant les autres opérations. On a ainsi représenté par L1 et L2 la ligne principale L1 correspondant aux opérations à l'exception de la découpe des filets et des manchons et par L2 la ligne qui permet la découpe des filets et des manchons.

Selon la pratique actuelle, la partie « coffre » de la volaille contenant les filets et les manchons d'ailes, est découpée en étant séparée du reste de la carcasse de la volaille qui reste elle sur la ligne de l'installation. Pour ce faire, la volaille maintenue par les pattes est positionnée sensiblement à l'horizontal temporairement pour être présentée en regard d'outils de découpe de la partie coffre. Cette opération est effectuée par des opérateurs ou par le biais d'un mécanisme de translation du type convoyeur. Les coffres découpés sont acheminés vers la ligne L2 à la ligne L1 indépendante et où se trouvent plusieurs postes de découpage des filets de chaque volaille. Les coffres sont alors positionnés sur des supports qui permettent leur enfilement pour les stabiliser en position et permettre la découpe manuelle des filets par les opérateurs. Une fois ces filets découpés, le reste du coffre est évacué et jeté. Pendant ce temps, la partie de volaille non découpée reste maintenue verticale sur la chaîne L1 de l'installation et va suivre les étapes suivantes.

Cette méthode de coupe des filets présente en pratique de nombreux inconvénients. Cela suggère qu'il y ait une certaine synchronisation dans le fonctionnement des deux lignes L1 et L2, et tout aléas est de nature à freiner ou à stopper le fonctionnement de la ligne L1 principale. Cela suggère donc en fonction des cadences de l'installation (750 à 1200 volailles à l'heure) d'avoir plusieurs opérateurs qui travaillent en simultané sur la ligne L2 et donc des coûts et charges élevés.

Cela entraîne aussi des coûts machines importants de part la nécessaire coexistence des deux lignes L1 et L2 l'une à côté de l'autre. Il faut tenir compte aussi de la nécessité d'avoir un matériel complémentaire pour le transfert des coffres de la ligne L1 à la ligne L2, une surveillance et une maintenance.

On comprend donc dans ces conditions de la nécessité de réfléchir et de concevoir une autre approche de l'installation pour économiser tous les coûts directs et indirects qui sont importants.

Par ailleurs, une autre contrainte peut résulter de la nature de la volaille et « de sa valeur ajoutée ». La qualité des parties nobles, les filets ou magrets pour les canards nécessite des conditions de découpe optimums avec le minimum de contraintes susceptibles de porter atteinte à cette qualité.

Les conditions actuelles des installations avec les lignes L1 et L2 posent donc de nombreux problèmes sans compter les aléas techniques de fonctionnement de ces lignes, les retards dus à des problèmes de manipulation des volailles et aussi le cadencement de l'installation.

On connaît par ailleurs des installations prévoyant la mise en place manuelle de la partie supérieure de la volaille (coffre, filets, ailes) avec un mécanisme de retournement. Cela est décrit dans les brevets US 2002/102933, US 2007/202789, US 6220953.

La démarche du demandeur a donc été de réfléchir à améliorer les conditions de cette phase intermédiaire de découpe des filets, dans le cadre d'une continuité de fonctionnement de l'installation automatisée et ce sans l'intervention d'un opérateur, pour la reprise des coffres.

La démarche du demandeur s'est donc inscrite dans une intégration du poste de découpage des filets de volailles suspendues.

Différentes approches ont été envisagées en tenant compte de la position de la volaille, tête en bas, avec par exemple une meilleure tenue de la volaille pour rendre plus facile la découpe des filets.

Ces approches n'ont en pratique pas permis de trouver une solution fiable.

La démarche du demandeur a donc alors été de reconsidérer la position de la volaille sur la chaîne automatisée de l'installation et spécifiquement lors de la phase de découpage des filets, en excluant toute opération de transfert sur une ligne complémentaire L2 du type précité.

La solution imaginée va à l'encontre de la pratique actuelle en modifiant temporairement la position de la volaille sur la chaîne automatisée de l'installation et sans l'enlever.

Cette solution par un dispositif bien particulier répond aux besoins exprimés par le demandeur en assurant la découpe des filets, en évitant l'intervention d'opérateurs et en augmentant la productivité de l'installation, qui n'est plus gênée et ralentie dans son fonctionnement pendant la phase précitée.
La solution apportée par le demandeur met en oeuvre un dispositif qui s'intègre parfaitement avec l'installation et son fonctionnement.

Selon une première caractéristique, le dispositif autorisant la découpe des filets de volaille dans une installation de découpe automatique des volailles en différentes parties, comprenant un dispositif d'accrochage en suspension des volailles est remarquable en ce que le dispositif est agencé pour autoriser la présentation de la volaille suspendue entière, tête en bas, et en ce que le dispositif autorisant la découpe des filets de volailles est intégré dans un portique, et ce qu'il comprend un dispositif autorisant la présentation de la volaille dans une situation inversée et retournée, avec tête relevée, en vue de la découpe des filets, et en ce que le dispositif comprend un outil de retournement, articulé à sa base par un mécanisme d'articulation, susceptible de pénétrer dans le corps de la volaille par introduction dans sa partie abdominale, pour ensuite permettre son relèvement, et en ce que ledit outil de retournement est disposé et articulé par le mécanisme disposé sur une structure support réglable en position par rapport au portique, et en ce que la structure support comprend un coulisseau susceptible de se déplacer verticalement le long d'une colonne de guidage disposée sur le portique selon une amplitude telle que la distance parcourue est suffisante pour mettre en oeuvre le dispositif et l'actionner pour lui faire prendre une position de relevage de la volaille , et en ce que ledit coulisseau est agencé pour autoriser d'une part le déplacement horizontal d'un bras coopérant avec l'outil de retournement, et d'assurer le positionnement et l'introduction d'une biellette en liaison solidaire au mécanisme d'articulation du moyen de retournement de la volaille, et en ce que la commande en fonctionnement de ladite structure support autorise la mise en oeuvre de l'outil par son introduction dans la volaille et son retournement pour autoriser la découpe des filets, puis son abaissement et l'extraction du corps de la volaille, filets découpées, ladite volaille étant ensuite convoyée vers un autre poste opératoire.

Ces caractéristiques et d'autres ressortiront bien de la suite de la description.

Pour fixer l'objet de l'invention illustré de manière non limitative aux figures des dessins :
- La figure 1 illustre de manière schématique une installation selon l'art antérieur, avec deux lignes adjacentes l'une principale et l'autre secondaire réservée à la découpe des filets.
- La figure 2 est une vue à caractère schématique exposant les différentes phases opératoires de la découpe d'une volaille dans une installation de découpe automatisée, selon l'invention. On a représenté le poste de découpe des filets intégré avec la chaîne de l'installation.
- La figure 3 est une vue à caractère schématique illustrant le principe du dispositif intégré avec l'installation en vue de la découpe des filets de volaille. Sur cette vue, le dispositif est représenté en situation de non sollicitation.
- La figure 4 est une vue partielle du dispositif, la volaille n'étant pas représentée et explicitant l'outil de retournement de volaille et son mécanisme associé et ce dans une position intermédiaire..
- La figure 5 est une vue suivant la figure 4, le dispositif étant sollicité en vue du relevage de la volaille, cette phase représente l'étape intermédiaire et l'introduction de l'outil de retournement à l'intérieur de la volaille par l'ouverture abdominale.
- La figure 6 est une vue complémentaire à celle de la figure 4 avec représentation du dispositif actionné pour le relevage de la volaille.
- La figure 7 est une vue suivant la figure 6, en représentation de la phase finale de retournement de la volaille avec présentation vers l'extérieur du côté poitrine de la volaille pour le prélèvement des filets.

Afin de rendre plus concret l'objet de l'invention, on le décrit maintenant d'une manière non limitative illustrée aux figures 1 à 7 des dessins.
Le dispositif tel qu'il va être décrit dans son principe et sa mise en oeuvre est intégré dans la chaîne de l'installation à l'endroit de la phase de découpe des filets pour coopérer dans les conditions explicitées ci-après ; position représentée schématiquement figure 2. En égard également des conditions de fonctionnement et de cadence de l'installation, l'invention vise à disposer une batterie de plusieurs postes successifs de découpe des filets en regard de la chaîne automatisée à l'endroit de découpe des filets. Ces dispositifs sont tous identiques et fonctionnent selon un automatisme approprié. A chaque dispositif, se trouve un opérateur qui découpe manuellement les filets de la volaille présentée. En variante, un automatisme de découpe peut être prévu.

Pour la clarté de l'invention, on a exclusivement représenté le dispositif autorisant la découpe des filets de volaille. Ce dispositif s'intègre dans l'installation de découpe automatique au poste « découpe des filets » ; les autres caractéristiques et dispositions de l'installation étant connues en elles-mêmes.
Dans le cadre de la conception du dispositif selon l'invention, le dispositif est intégré par rapport à la chaîne automatisée de l'installation. Pour la compréhension de l'invention, on décrira succinctement le fonctionnement dans une configuration autonome et indépendante de poste individuel, puis de manière détaillée le dispositif étant le même que celui qui sera intégré à la chaîne.
Le dispositif selon l'invention est référencé par (D) et est monté sur un portique (P) support. Ce portique est aménagé pour d'une part la réception du dispositif d'accrochage en suspension (D1) des volailles. Ce dispositif est à position fixe et permet l'accrochage des volailles par les pattes et tête en bas. Ce portique est aussi aménagé d'autre part avec la réception d'un dispositif (D2) selon l'invention, autorisant la présentation des volailles en position pour autoriser la découpe des filets de volaille.

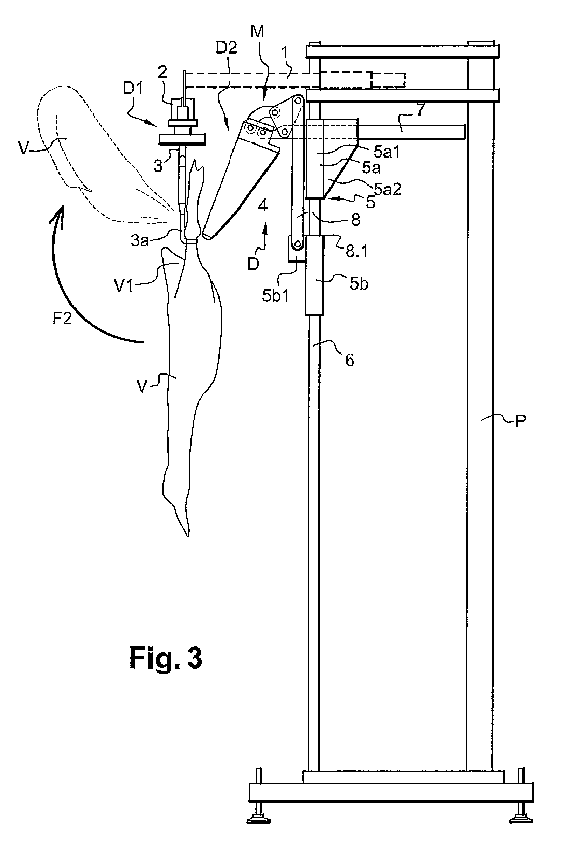

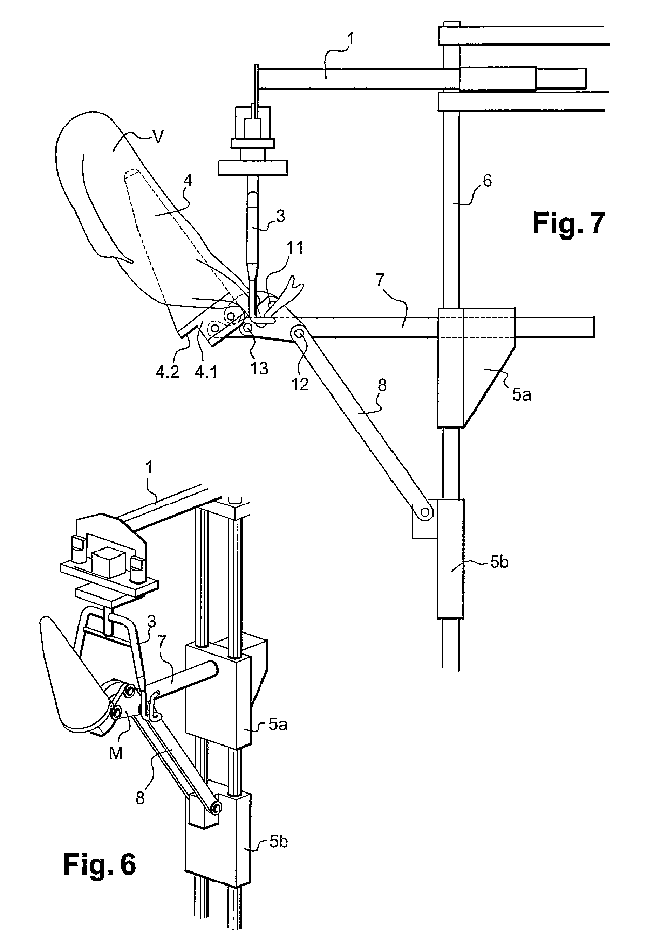

Dans cette version de poste individuel, le dispositif (D1) d'accrochage en suspension des volailles comprend un bras horizontal (1) solidaire du portique de toute manière appropriée, présentant en extrémité une plateforme (2) recevant un étrier (3) vertical lui-même agencé à ses extrémités avec des profils (3a) en forme de griffes pour le positionnement, le maintien et l'accrochage de la volaille par ses pattes, ladite volaille étant en suspension la tête vers le bas.
Dans cette situation, la volaille (V) étant représentée figure 3, son ouverture abdominale (V1) se trouve dans le plan supérieur.
En finalité, le dispositif intégré à la chaîne de découpe, le portique se présente sans cet aménagement de suspension de volaille en regard de la chaîne de défilement des volailles.
Le dispositif (D2) de l'invention, permettant la présentation de la volaille dans une situation inversée, tête relevée, comprend un outil de retournement (4) sous forme d'un sabot conique par exemple, articulé à sa base par un mécanisme d'articulation (M), l'outil (4) étant susceptible de pénétrer dans le corps de la volaille par introduction par son ouverture abdominale, pour ensuite permettre son relèvement par retournement comme représenté figure 7. Cet outil (4) est disposé et articulé par un mécanisme (M) disposé sur une structure support réglable en position par rapport au portique. Cette structure support comprend une partie formant un coulisseau (5) susceptible de se déplacer de manière limitée et contrôlée le long d'une colonne de guidage (6) disposée verticalement sur le portique (P). Ce coulisseau est susceptible de se déplacer le long de la colonne de guidage selon une amplitude telle que la distance parcourue est suffisante pour mettre en oeuvre le dispositif (D2) et l'actionner pour lui faire prendre une position de relevage et retournement de la volaille (V) (figure 7).

Plus particulièrement et dans une mise en oeuvre avantageuse, ce coulisseau (5) comprend une partie principale (5a) supérieure avec un conduit (5a1) de passage de la colonne de guidage (6) et une base (5a2) à partir de laquelle est disposée horizontalement un bras (7) mobile. Le coulisseau inclut une partie secondaire (5b) indépendante de la partie principale (a) et coulissant le long de la colonne de guidage (6) selon une amplitude différente.
Cette partie secondaire (5b) inclut une patte (5b1) d'attache et de fixation de l'extrémité (8.1) d'une biellette (8) de liaison dont l'autre extrémité (8.2) est solidarisée au mécanisme (M) d'articulation de l'outil de retournement (4) et de relevage de la volaille. Ce bras (7) est susceptible à son extrémité avant (7a) de faire butée de position de l'outil (4) agencé avec un talon (4.1) disposé en arrière et présentant une échancrure (4.2) à cet effet.
En outre, ledit talon de l'outil permet la fixation d'un raccord coudé (9). Ce dernier est fixé ainsi d'une part au talon arrière de l'outil par des moyens de liaison (10) et d'autre part à son autre extrémité au mécanisme (M) d'articulation. Ce mécanisme (M) est par exemple agencé avec deux flasques parallèles espacés entretoisés par trois axes (11, 12, 13) de triangulation permettant respectivement la fixation du raccord coudé (9), de l'extrémité (8.2) de la biellette (8), et la fixation sur le bras mobile porteur (7).
L'axe (13) constitue le pivot de l'orientation du mécanisme (M). Il y a donc lieu d'exposer le mode de fonctionnement du dispositif en se référant aux figures des dessins.

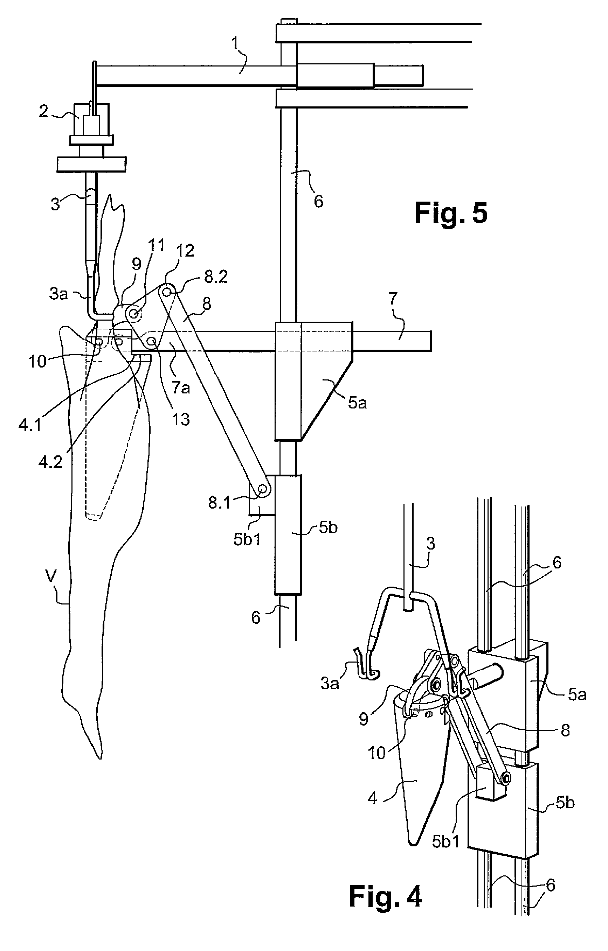

En se référant figure 3, en position initiale de la volaille, tête vers le bas l'ensemble du dispositif (D2) et de son mécanisme (M) se trouve en position haute sur le portique. Pour permettre le basculement et retournement de la volaille selon la flèche (F2), il faut mettre en oeuvre l'automatisme de fonctionnement du dispositif (D2) et de son mécanisme (M) qui se trouve face à la volaille.
A cet effet, en se référant figure 5, la commande de l'automatisme provoque l'abaissement de la structure support est donc du coulisseau (5) le long de la colonne de guidage (6) combiné avec un déplacement horizontal du bras mobile (7) et de ce fait provoquant l'articulation de la biellette (8). Cela permet l'introduction de l'outil (4) dans l'ouverture abdominale de la volaille. Une fois l'outil (4) correctement positionné dans la volaille, on peut procéder à l'actionnement du mécanisme pour entraîner le retournement de la volaille.

Lorsque l'outil a pénétré complètement dans le corps de la volaille, il y a lieu de procéder à la phase de retournement complet de celle-ci en l'écartant au maximum de la partie crochet, la volaille étant toujours maintenue par les pattes au niveau de ses jointures d'articulation. A cet effet, le bras mobile (7) continue à se déplacer horizontalement vers l'avant. La partie principale (5a) du coulisseau vient en butée de limite de déplacement, tandis que la partie secondaire (b) du coulisseau a une amplitude plus importante d'abaissement, ce qui permet et entraîne l'articulation complète de la biellette (8) et la mise en oeuvre de retournement par la rotation du mécanisme (M) autour de l'axe pivot (13). Dans cette situation finale représentée figure 7, la volaille est déportée vers l'avant du portique, en étant éloignée de la zone d'accrochage tout en étant maintenue par les pattes.
La volaille se trouve donc dans une position orientée vers l'extérieur et on peut procéder à la découpe des filets. Cette opération peut s'effectuer manuellement par des opérateurs ou par un mécanisme de découpe. Lorsque la découpe des filets est terminée, la volaille est repositionnée en situation initiale, tête en bas, par le mouvement de retrait du mécanisme, puis l'extraction de l'outil de retournement, hors du corps de la volaille.

Les avantages ressortent bien de la description, en particulier on souligne et on rappelle : la nouvelle conception simplifiée de l'automatisme permettant la mise en oeuvre dans la modification de présentation de la volaille en phase d'arrivée au poste « découpe des filets », en phase découpage des filets, en phase d'évacuation de la volaille, filets enlevés.
Le dispositif selon l'invention apport des gains de productivité très important et d'après les tests réalisés par le demandeur une installation automatique incluant le dispositif de l'invention permet de traiter environ 1500 volailles à l'heure.

## Revendications

1. Dispositif autorisant la découpe des filets de volaille dans une installation de découpe automatique des volailles en différentes parties, comprenant un dispositif d'accrochage en suspension (D1) des volailles **caractérisé en ce que** le dispositif (D1) est agencé pour autoriser la présentation de la volaille suspendue entière, tête en bas,
et **en ce que** le dispositif autorisant la découpe des filets de volailles est intégré dans un portique (P),
et ce qu'il comprend un dispositif (D2) autorisant la présentation de la volaille dans une situation inversée et retournée, avec tête relevée, en vue de la découpe des filets,
et **en ce que** le dispositif (D2) comprend un outil de retournement (4), articulé à sa base par un mécanisme d'articulation (M), susceptible de pénétrer dans le corps de la volaille par introduction dans sa partie abdominale, pour ensuite permettre son relèvement,
et **en ce que** ledit outil de retournement (4) est disposé et articulé par le mécanisme (M) disposé sur une structure support réglable en position par rapport au portique (P),
et **en ce que** la structure support comprend un coulisseau (5) susceptible de se déplacer verticalement le long d'une colonne de guidage disposée sur le portique selon une amplitude telle que la distance parcourue est suffisante pour mettre en oeuvre le dispositif (D2) et l'actionner pour lui faire prendre une position de relevage de la volaille (V),
et **en ce que** ledit coulisseau est agencé pour autoriser d'une part le déplacement horizontal d'un bras (7) coopérant avec l'outil de retournement, et d'assurer le positionnement et l'introduction d'une biellette (8) en liaison solidaire au mécanisme (M) d'articulation du moyen de retournement de la volaille,
et **en ce que** la commande en fonctionnement de ladite structure support autorise la mise en oeuvre de l'outil par son introduction dans la volaille et son retournement pour autoriser la découpe des filets, puis son abaissement et l'extraction du corps de la volaille, filets découpées, ladite volaille étant ensuite convoyée vers un autre poste opératoire.

2. Dispositif selon la revendication 1, **caractérisé en ce que** le coulisseau (5) comprend une partie principale (5a) supérieure avec un conduit (5a1) de passage de la colonne de guidage (6) et une base (5a2) à partir de laquelle est disposée horizontalement un bras (7) mobile, et **en ce que** le coulisseau inclut une partie secondaire (5b) indépendante de la partie principale (5a) et coulissant le long du tube de guidage (6) selon une amplitude différente, et **en ce que** la partie secondaire (5b) inclut une patte (5b1) d'attache et de fixation de l'extrémité (8.1) d'une biellette (8) de liaison dont l'autre extrémité (8.2) est solidarisée au mécanisme (M) d'articulation du moyen (4) de relevage de la volaille.

3. Dispositif selon la revendication 2, **caractérisé en ce que** le bras (7) est susceptible à son extrémité avant (7a) de faire butée de position à l'outil (4) agencé avec un talon (4.1) disposé en arrière et présentant une échancrure (4.2).

4. Dispositif selon la revendication 1, **caractérisé en ce que** l'outil présente un talon qui permet la fixation d'un raccord coudé (9), et **en ce que** ce dernier est fixé ainsi d'une part au talon arrière de l'outil par des moyens de liaison (10) et d'autre part à son autre extrémité au mécanisme (M) d'articulation.

5. Dispositif selon la revendication 3, **caractérisé en ce que** le mécanisme (M) est agencé avec deux flasques parallèles espacés entretoisés par trois axes (11, 12, 13) de triangulation permettant respectivement la fixation du raccord coudé (9), de l'extrémité (8.2) de la biellette (8), et la fixation sur le bras mobile porteur (7), et **en ce que** l'axe (13) constitue le pivot de l'orientation du mécanisme (M).
